# EUROPEAN PATENT SPECIFICATION

(11) **EP 3 585 043 B1**
(45) Date of publication and mention of the grant of the patent: **25.05.2022**
(21) Application number: 18904496.9
(22) Date of filing: 25.10.2018
(51) Int. Cl.: H04N 5/225, G06K 9/46, G06K 9/00, G06K 9/60, H04N 1/00, H04N 1/04

(54) **IMAGE ACQUISITION DEVICE**
BILDENTGEGENNAHMEVORRICHTUNG
DISPOSITIF D'ACQUISITION D'IMAGE

(30) Priority: 10.04.2018 CN 201820512430 U
(43) Date of publication of application: 25.12.2019
(73) Proprietor: Shenzhen Sensetime Technology Co., Ltd., Shenzhen, Guangdong 518000 (CN)
(72) Inventor: ZHONG, Conghong, Shenzhen, Guangdong 518000 (CN); XIANG, Xubo, Shenzhen, Guangdong 518000 (CN); SHE, Zhonghua, Shenzhen, Guangdong 518000 (CN); MA, Kun, Shenzhen, Guangdong 518000 (CN); LI, Jian, Shenzhen, Guangdong 518000 (CN)
(74) Representative: Lavoix
(86) International application number: PCT/CN2018/111799
(87) International publication number: WO 2019/196384

(56) References cited:
- WO-A1-2016/120379
- CN-A- 103 699 892
- CN-U- 204 009 931
- CN-U- 204 168 372
- CN-U- 205 176 884
- CN-U- 205 486 511
- CN-U- 206 946 512
- US-A1- 2003 215 114
- US-A1- 2008 304 111
- US-A1- 2011 128 360
- US-A1- 2011 261 423

## Description

### CROSS-REFERENCE TO RELATED APPLICATION

The present disclosure claims priority to Chinese Patent Application No. 201820512430.5, filed on April 10, 2018.

### TECHNICAL FIELD

The disclosure relates to information acquisition technologies, and in particular, to an image acquisition device.

### BACKGROUND

An identity document acquisition device is a device capable of acquiring information on a user's identity document; however, existing identity document information acquisition devices are not compatible with acquisition of multiple types of identity documents. If there is a need to acquire an identity card, there is a need to acquire the identity card by using an identity card acquisition device (also called an identity card reader); and if there is a need to acquire a passport, there is a need to acquire the passport by using a passport acquisition device (also called a passport reader). Different identity document information acquisition devices are needed for different identity documents, so that the costs are high and the user experience is poor.

Related technologies are known from document US 2011/261423 A1 which discloses an image acquisition device according to the preamble of claim 1, and document WO 2016/120379 A1 which discloses a system for authenticating a security article which comprises capturing biographic information from the security article, detecting a physical property of a security feature in the security article, processing the captured biographic information and the detected physical property of the security feature to determine whether the security article is genuine, and printing a mark depending on the determination.

### SUMMARY

The object of the invention is achieved by the subject-matter of the independent claims. Preferred embodiments are defined in the dependent claims. Further examples are provided for facilitating the understanding of the invention.

The technical solutions provided in the embodiments of this disclosure may include the following beneficial effects:
According to the technical solutions in the embodiments of this disclosure, the image acquisition device includes: a main body structure, which is provided with an image acquisition means and at least two accommodating structures, the at least two accommodating structures including a first accommodating structure configured to place a first target object and a second accommodating structure configured to place a second target object, where the first accommodating structure is arranged at a first position of the main body structure, the first position satisfying the condition that the first target object placed on the first accommodating structure is located within acquisition area coverage of the image acquisition means; and the second accommodating structure is arranged at a second position of the main body structure, the second position satisfying the condition that the second target object placed on the second accommodating structure is located within the acquisition area coverage of the image acquisition means. By adopting the technical solutions in the embodiments of this disclosure, where a device is provided with at least two accommodating structures for respectively accommodating different types of target objects (e.g., identity documents), a function of supporting acquisition of multiple types of identity documents is implemented, costs of an identity document information acquisition device are reduced, and user experience is improved.

It should be understood that the above general description and the following detailed description are merely exemplary and explanatory and are not intended to limit the present disclosure.

### BRIEF DESCRIPTION OF DRAWINGS

The accompanying drawings, which are incorporated in and constitute a part of this specification, illustrate embodiments consistent with this disclosure and, together with the specification, serve to explain the principles of this disclosure.
FIG. 1 is a schematic structural composition diagram of an image acquisition device in an embodiment of this disclosure;
FIG. 2 is a schematic structure diagram of an image acquisition device according to an embodiment of this disclosure;
FIG. 3 is a front view of an image acquisition device according to an embodiment of this disclosure;
FIG. 4 is a back view of an image acquisition device according to an embodiment of this disclosure;
FIG. 5 is a top view of an image acquisition device according to an embodiment of this disclosure;
FIG. 6 is a bottom view of an image acquisition device according to an embodiment of this disclosure;
FIG. 7 is a left view of an image acquisition device according to an embodiment of this disclosure;
FIG. 8 is a right view of an image acquisition device according to an embodiment of this disclosure.

### DETAILED DESCRIPTION

To understand the features and technical content of the embodiments of this disclosure in more detail, the following describes implementations of the embodiments of the present disclosure in detail with reference to the accompanying drawings. The accompanying drawings are intended for reference only, and not intended to limit the embodiments of this disclosure.

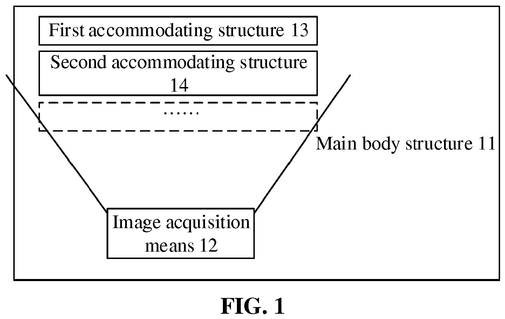

FIG. 1 is a schematic structural composition diagram of an image acquisition device according to an embodiment of this disclosure. As show in FIG. 1, the image acquisition device includes: a main body structure 11, which is provided with an image acquisition means 12 and at least two accommodating structures, the at least two accommodating structures including a first accommodating structure 13 configured to place a first target object and a second accommodating structure 14 configured to place a second target object, where

the first accommodating structure 13 is arranged at a first position of the main body structure 11, the first position satisfying the condition that the first target object placed on the first accommodating structure 13 is located within acquisition area coverage of the image acquisition means 12; and
the second accommodating structure 14 is arranged at a second position of the main body structure 11, the second position satisfying the condition that the second target object placed on the second accommodating structure 14 is located within the acquisition area coverage of the image acquisition means 12.

In the embodiment of this disclosure, the shape of the main body structure 11 is not limited and may be, for example, a cubic structure, an irregular polyhedron structure, or the like.

In the embodiment of this disclosure, the main body structure 11 is provided with the image acquisition means 12 and the at least two accommodating structures, for example, two accommodating structures, three accommodating structures, or the like. In the embodiment of this disclosure, different accommodating structures can accommodate target objects with different sizes, for example, the first accommodating structure 13 can accommodate the first target object and the second accommodating structure 14 can accommodate the second target object. In one example, the first target object is an identity card and the second target object is a passport. Certainly, the types of the first target object and the second target object are not limited thereto, and may further be other types of identity documents such as a driver's license, a social security card, and an all-in-one card.

In the embodiment of this disclosure, the position of the first accommodating structure 13 on the main body structure 11 needs to satisfy that the first target object placed on the first accommodating structure 13 is located within the acquisition area coverage of the image acquisition means 12. In such a way, when a user places the first target object on the first accommodating structure 13, the image acquisition means 12 can acquire an image of the first target object. Furthermore, the image acquisition means 12 in the embodiment of this disclosure has a facial photo acquisition function. The image acquisition means 12 provided in the embodiment of this disclosure can not only acquire an image of the first target object, but also preliminarily recognize the image of the first target object, thereby capturing a facial image area, and then send the image in the facial image area (i.e., a facial photo) to other processing devices (e.g., a laptop and a desktop computer) for facial information recognition and comparison. Taking an application scenario of real-time facial comparison as an example, the image acquisition device sends a facial photo on an acquired identity document to an identity authentication machine (called SenseID), and meanwhile, a real-time facial image is acquired by means of a camera on the SenseID, and the facial photo on the identity document is compared with the real-time facial image to obtain the facial recognition result (that is, whether the person currently photographed by the camera and the person in the photo on the identity document are the same one). Similarly, the position of the second accommodating structure 14 on the main body structure 11 needs to satisfy that the second target object placed on the second accommodating structure 14 is located within the acquisition area coverage of the image acquisition means 12. In such a way, when a user places the second target object on the second accommodating structure 14, the image acquisition means 12 can acquire an image of the second target object. Furthermore, the image acquisition means 12 in the embodiment of this disclosure has a facial photo acquisition function. The image acquisition means 12 provided in the embodiment of this disclosure can not only acquire an image of the second target object, but also preliminarily recognize the image of the second target object, thereby capturing a facial image area, and then send the image in the facial image area to other processing devices (e.g., a laptop and a desktop computer) for facial information recognition and comparison.

The image acquisition device in the embodiment of this disclosure is described in detail below with reference to the specific examples.

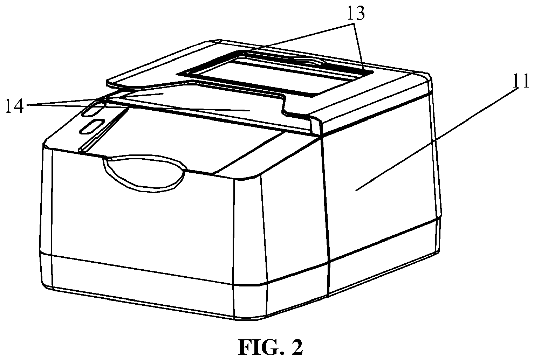

FIG. 2 is a schematic structure diagram of an image acquisition device according to an embodiment of this disclosure. With reference to FIG. 2, the image acquisition device includes a main body structure 11, which is provided with an image acquisition means 12 (covered and not shown) and at least two accommodating structures, the at least two accommodating structures including a first accommodating structure 13 configured to place a first target object and a second accommodating structure 14 configured to place a second target object, where the first accommodating structure 13 is arranged at a first position of the main body structure 11, the first position satisfying the condition that the first target object placed on the first accommodating structure 13 is located within acquisition area coverage of the image acquisition means 12; and the second accommodating structure 14 is arranged at a second position of the main body structure 11, the second position satisfying the condition that the second target object placed on the second accommodating structure 14 is located within the acquisition area coverage of the image acquisition means 12.

In this example, the first accommodating structure 13 is particularly applicable to card-like identity documents, such as identity cards, social security cards and other identity documents of a standard size. The second accommodating structure 14 is particularly applicable to identity cards of other sizes, such as passports, driver's licenses and student ID cards. The image acquisition device in the embodiment of this disclosure supports a function of acquiring multiple types of identity document images, thereby facilitating the acquisition of the identity document images of different sizes and different shapes.

In this example, the main body structure 11 of the image acquisition device is approximately cubic and has six side surfaces as a whole, where the top surface is a first side surface and is provided with a section structure, and other side surfaces are approximately planar.

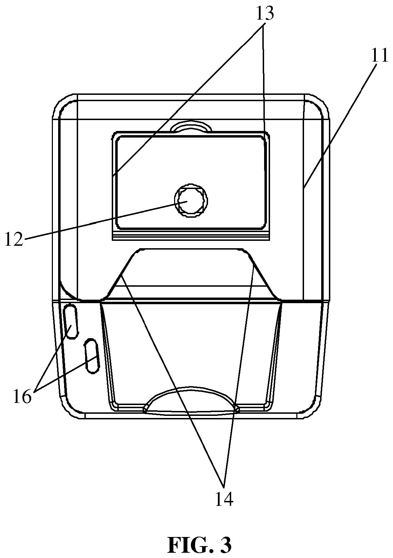

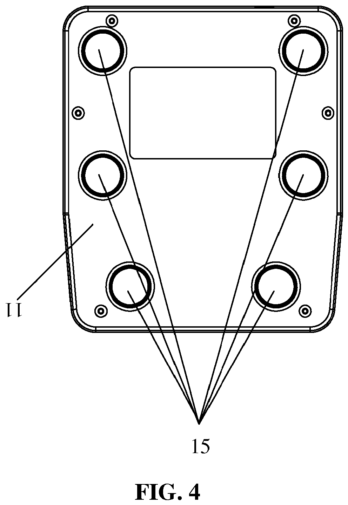

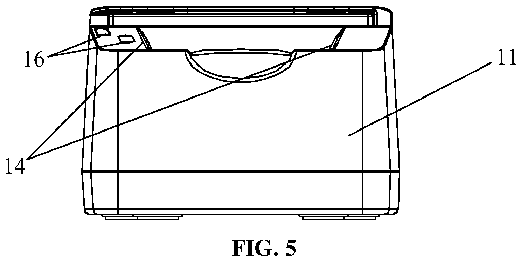

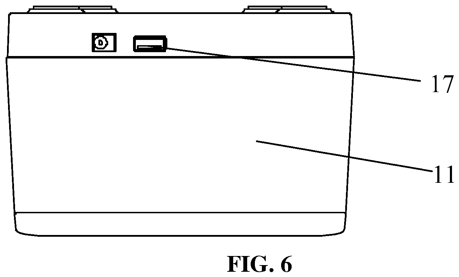

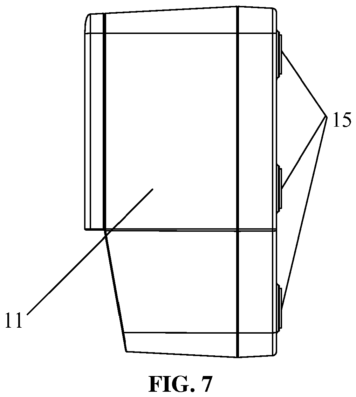

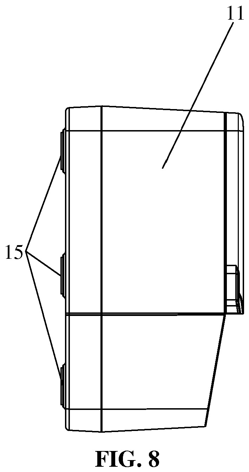

FIG. 3 to FIG. 8 are schematic diagrams of an image acquisition device according to an embodiment of this disclosure from different angles of view. FIG. 3 is a front view of an image acquisition device according to an embodiment of this disclosure. FIG. 4 is a back view of an image acquisition device according to an embodiment of this disclosure. FIG. 5 is a top view of an image acquisition device according to an embodiment of this disclosure. FIG. 6 is a bottom view of an image acquisition device according to an embodiment of this disclosure. FIG. 7 is a left view of an image acquisition device according to an embodiment of this disclosure. FIG. 8 is a right view of an image acquisition device according to an embodiment of this disclosure. With reference to FIG. 3 to FIG. 8, the main body structure 11 is provided with a recess structure, and the image acquisition means 12 is provided at the bottom of the recess structure. An opening of the recess structure faces the first side surfaces of the main body structure 11, and the first side surface is provided with a first accommodating structure 13. A first hollow structure is provided at a first position on the first side surface corresponding to the opening of the recess structure, and a slot for fixing the first target object is provided at the periphery of the first hollow structure. A second accommodating structure 14 is formed between the first side surface and a plane where the opening of the recess structure is located, where a carrier stage for fixing the second target object is provided at the periphery of the opening of the recess structure. A second side surface of the main body structure 11 is provided with a base 15 configured to fix the main body structure 11 on a bearing surface. The main body structure 11 is further provided with a control means 16 configured to control the image acquisition means 12. The main body structure 11 is further provided with a communication interface 17 configured to enable the image acquisition device to communicate with an external device.

In one example, a light supplement means (not shown) is provided inside the recess structure. Furthermore, a light guide material is provided on a surface of the recess structure. In this way, the brightness of a photographing environment can be enhanced so that high quality images can be obtained by photographing under an environment with sufficient light.

In one example, the base 15 may be multiple rubber pads which are evenly distributed at the bottom of the image acquisition device and have an effect of preventing bottom abrasion of the image acquisition device and a function of stabilizing the image acquisition device.

In one example, the control means 16 may be a control button or a touch screen. For example, the control means 16 includes two control buttons, one is configured to power on or off the image acquisition device, and the other one is configured to switch photographing modes, for example, a first photographing mode is a mode of photographing a first target object, and a second photographing mode is a mode of photographing a second target object. Different photographing modes correspond to different optical parameters, such as focal length, so as to adaptively photograph different target objects to obtain clear images.

In one example, the communication interface 17 at least includes a USB interface, which is configured to send the acquired identity document image to other devices, such as an identity authentication machine (as also called SenseID) product, by means of a USB data cable, so that the SenseID compares the information of the identity document image with real-time facial information.

In the embodiment of this disclosure, the first accommodating structure 13 and the second accommodating structure 14 are distributed in a layered structure, and the first accommodating structure 13 is located at the upper layer of the second accommodating structure 14. When a user wants to place a first target object (e.g., an identity card), the user only needs to directly place the first target object on the first accommodating structure 13, and when the user wants to place a second target object (e.g., a passport), the user needs to insert the second target object into the second accommodating structure 14 from a space between the first side surface and the plane where the opening of the recess structure is located.

By adopting the image acquisition device in the embodiments of this disclosure, where one device is provided with at least two accommodating structures for respectively accommodating different types of target objects (e.g., identity documents), a function of supporting acquisition of multiple types of identity documents is implemented, costs of an identity document information acquisition device are reduced, and user experience is improved.

The technical solutions recited in the embodiments of this disclosure can be arbitrarily combined without causing conflicts.

The descriptions above are only specific implementations of this disclosure. However, the scope of protection of this disclosure is not limited thereto. Within the technical scope disclosed by this disclosure, any variation or substitution that can be easily conceived of by those skilled in the art should all fall within the scope of protection of this disclosure, as defined by the appended claims.

### INDUSTRIAL APPLICABILITY

According to the technical solutions in the embodiments of this disclosure, the image acquisition device includes: a main body structure, which is provided with an image acquisition means and at least two accommodating structures, the at least two accommodating structures including a first accommodating structure configured to place a first target object and a second accommodating structure configured to place a second target object, where the first accommodating structure is arranged at a first position of the main body structure, the first position satisfying the condition that the first target object placed on the first accommodating structure is located within acquisition area coverage of the image acquisition means; and the second accommodating structure is arranged at a second position of the main body structure, the second position satisfying the condition that the second target object placed on the second accommodating structure is located within the acquisition area coverage of the image acquisition means. In this way, one device provided with at least two accommodating structures for respectively accommodating different types of target objects (e.g., identity documents), so that a function of supporting acquisition of multiple types of identity documents is implemented, costs of an identity document information acquisition device are reduced, and user experience is improved.

## Claims

1. An image acquisition device comprising: a main body structure (11) provided with an image acquisition means (12) and at least two accommodating structures, the at least two accommodating structures comprising a first accommodating structure (13) configured to place a first target object and a second accommodating structure (14) configured to place a second target object, wherein
the first accommodating structure (13) is arranged at a first position of the main body structure (11), the first position satisfying the condition that the first target object placed on the first accommodating structure (13) is located within acquisition area coverage of the image acquisition means (12); and
the second accommodating structure (14) is arranged at a second position of the main body structure (11), the second position satisfying the condition that the second target object placed on the second accommodating structure (14) is located within the acquisition area coverage of the image acquisition means (12), **characterized in that** the first target object is directly disposed on the first accommodating structure,
wherein the first accommodating structure (13) and the second accommodating structure (14) are distributed in a layered structure, and the first accommodating structure (13) is located at an upper layer of the second accommodating structure (14),
wherein the main body structure (11) is provided with a recess structure, wherein an opening of the recess structure faces a first side surface of the main body structure (11), and the first side surface is provided with the first accommodating structure (13), which comprises:
a first hollow structure is provided at a first position on the first side surface corresponding to the opening of the recess structure, and a slot for fixing the first target object is provided at the periphery of the first hollow structure.

2. The image acquisition device according to claim 1, wherein the image acquisition means (12) is arranged at the bottom of the recess structure.

3. The image acquisition device according to claim 1, wherein the second accommodating structure (14) is formed between the first side surface and a plane where the opening of the recess structure is located, wherein a carrier stage for fixing the second target object is provided at the periphery of the opening of the recess structure.

4. The image acquisition device according to claim 1, wherein a light supplement means is provided inside the recess structure.

5. The image acquisition device according to claim 4, wherein a light guide material is provided on a surface of the recess structure.

6. The image acquisition device according to claim 1, wherein a second side surface of the main body structure (11) is provided with a base (15) for fixing the main body structure (11) on a bearing surface.

7. The image acquisition device according to any one of claims 1 to 6, wherein the main body structure (11) is further provided with a control means (16) configured to control the image acquisition means (12), wherein the control means (16) is a control button or a touch screen.

8. The image acquisition device according to any one of claims 1 to 6, wherein the main body structure (11) is further provided with a communication interface configured to enable the image acquisition device to communicate with an external device, and the communication port at least comprises a Universal Serial Bus (USB) interface.

9. An identity authentication system comprising:
an image acquisition device comprising:
a main body structure (11) provided with a first image acquisition means (12) and at least two accommodating structures, the at least two accommodating structures comprising a first accommodating structure (13) configured to place a first target object and a second accommodating structure (14) configured to place a second target object, wherein
the first accommodating structure (13) is arranged at a first position of the main body structure (11), the first position satisfying the condition that the first target object placed on the first accommodating structure (13) is located within acquisition area coverage of the first image acquisition means (12);
the second accommodating structure (14) is arranged at a second position of the main body structure (11), the second position satisfying the condition that the second target object placed on the second accommodating structure (14) is located within the acquisition area coverage of the first image acquisition means (12);
a communication interface configured to receive a first image captured by first image acquisition means (12), the identity authentication system being **characterized in that** it further comprises:
an identity authentication machine comprising a second image acquisition means (12) for capturing a second image, and comparing a first image received via the communication interface with the second image to obtain a comparison result, and wherein the first target object is directly disposed on the first accommodating structure,
wherein the first accommodating structure (13) and the second accommodating structure (14) are distributed in a layered structure, and the first accommodating structure (13) is located at an upper layer of the second accommodating structure (14),
wherein the main body structure (11) is provided with a recess structure, wherein an opening of the recess structure faces a first side surface of the main body structure (11), and the first side surface is provided with the first accommodating structure (13), which comprises:
a first hollow structure is provided at a first position on the first side surface corresponding to the opening of the recess structure, and a slot for fixing the first target object is provided at the periphery of the first hollow structure.

10. The image acquisition device according to claim 9, wherein the first image acquisition means (12) is arranged at the bottom of the recess structure.

11. The image acquisition device according to claim 9, wherein the second accommodating structure (14) is formed between the first side surface and a plane where the opening of the recess structure is located, wherein a carrier stage for fixing the second target object is provided at the periphery of the opening of the recess structure.

## Patentansprüche

1. Bilderfassungsvorrichtung, umfassend: eine Hauptkörperstruktur (11), die mit einer Bilderfassungseinrichtung (12) und mindestens zwei Aufnahmestrukturen versehen ist, die mindestens zwei Aufnahmestrukturen umfassend eine erste Aufnahmestruktur (13), die konfiguriert ist, um ein erstes Zielobjekt zu platzieren, und eine zweite Aufnahmestruktur (14), die konfiguriert ist, um ein zweites Zielobjekt zu platzieren, wobei
die erste Aufnahmestruktur (13) an einer ersten Position der Hauptkörperstruktur (11) angeordnet ist, wobei die erste Position die Bedingung erfüllt, dass sich das erste Zielobjekt, das auf der ersten Aufnahmestruktur (13) platziert ist, innerhalb der Erfassungsbereichsabdeckung der Bilderfassungseinrichtung (12) befindet; und
die zweite Aufnahmestruktur (14) an einer zweiten Position der Hauptkörperstruktur (11) angeordnet ist, wobei die zweite Position die Bedingung erfüllt, dass sich das zweite Zielobjekt, das auf der zweiten Aufnahmestruktur (14) platziert ist, innerhalb der Erfassungsbereichsabdeckung der Bilderfassungseinrichtung (12) befindet, **dadurch gekennzeichnet, dass** das erste Zielobjekt direkt auf die erste Aufnahmestruktur aufgebracht ist,
wobei die erste Aufnahmestruktur (13) und die zweite Aufnahmestruktur (14) in einer geschichteten Struktur verteilt sind und sich die erste Aufnahmestruktur (13) in einer oberen Schicht der zweiten Aufnahmestruktur (14) befindet,
wobei die Hauptkörperstruktur (11) mit einer Aussparungsstruktur versehen ist, wobei eine Öffnung der Aussparungsstruktur einer ersten Seitenfläche der Hauptkörperstruktur (11) zugewandt ist, und die erste Seitenfläche mit der ersten Aufnahmestruktur (13) versehen ist, die Folgendes umfasst:
eine erste hohle Struktur ist an einer ersten Position auf der ersten Seitenfläche bereitgestellt, die der Öffnung der Aussparungsstruktur entspricht, und ein Schlitz zum Befestigen des ersten Zielobjekts ist an dem Umfang der ersten hohlen Struktur bereitgestellt.

2. Bilderfassungsvorrichtung nach Anspruch 1, wobei die Bilderfassungseinrichtung (12) an dem Boden der Aussparungsstruktur angeordnet ist.

3. Bilderfassungsvorrichtung nach Anspruch 1, wobei die zweite Aufnahmestruktur (14) zwischen der ersten Seitenfläche und einer Ebene, in der sich die Öffnung der Aussparungsstruktur befindet, gebildet ist, wobei an dem Umfang der Öffnung der Aussparungsstruktur eine Trägerplattform zum Befestigen des zweiten Zielobjekts bereitgestellt ist.

4. Bilderfassungsvorrichtung nach Anspruch 1, wobei innerhalb der Aussparungsstruktur eine Lichtergänzungseinrichtung bereitgestellt ist.

5. Bilderfassungsvorrichtung nach Anspruch 4, wobei auf einer Oberfläche der Aussparungsstruktur ein Lichtleitermaterial bereitgestellt ist.

6. Bilderfassungsvorrichtung nach Anspruch 1, wobei eine zweite Seitenfläche der Hauptkörperstruktur (11) mit einer Basis (15) zum Befestigen der Hauptkörperstruktur (11) auf einer Lagerfläche versehen ist.

7. Bilderfassungsvorrichtung nach einem der Ansprüche 1 bis 6, wobei die Hauptkörperstruktur (11) ferner mit einer Steuereinrichtung (16) versehen ist, die konfiguriert ist, um die Bilderfassungseinrichtung (12) zu steuern, wobei die Steuereinrichtung (16) eine Bedientaste oder ein Berührungsbildschirm ist.

8. Bilderfassungsvorrichtung nach einem der Ansprüche 1 bis 6, wobei die Hauptkörperstruktur (11) ferner mit einer Kommunikationsschnittstelle versehen ist, die konfiguriert ist, um zu ermöglichen, dass die Bilderfassungsvorrichtung mit einer externen Vorrichtung kommuniziert, und der Kommunikationsanschluss zumindest eine Schnittstelle Universal Serial Bus (USB) umfasst.

9. Identitätsauthentifizierungssystem, umfassend:
eine Bilderfassungsvorrichtung, umfassend:
eine Hauptkörperstruktur (11), die mit einer ersten Bilderfassungseinrichtung (12) und mindestens zwei Aufnahmestrukturen versehen ist, die mindestens zwei Aufnahmestrukturen umfassend eine erste Aufnahmestruktur (13), die konfiguriert ist, um ein erstes Zielobjekt zu platzieren, und eine zweite Aufnahmestruktur (14), die konfiguriert ist, um ein zweites Zielobjekt zu platzieren, wobei
die erste Aufnahmestruktur (13) an einer ersten Position der Hauptkörperstruktur (11) angeordnet ist, wobei die erste Position die Bedingung erfüllt, dass sich das erste Zielobjekt, das auf der ersten Aufnahmestruktur (13) platziert ist, innerhalb der Erfassungsbereichsabdeckung der ersten Bilderfassungseinrichtung (12) befindet;
die zweite Aufnahmestruktur (14) an einer zweiten Position der Hauptkörperstruktur (11) angeordnet ist, wobei die zweite Position die Bedingung erfüllt, dass sich das zweite Zielobjekt, das auf der zweiten Aufnahmestruktur (14) platziert ist, innerhalb der Erfassungsbereichsabdeckung der ersten Bilderfassungseinrichtung (12) befindet;
eine Kommunikationsschnittstelle, die konfiguriert ist, um ein erstes Bild zu empfangen, das von einer ersten Bilderfassungseinrichtung (12) erfasst wird, wobei das Identitätsauthentifizierungssystem **dadurch gekennzeichnet ist, dass** es ferner Folgendes umfasst:
eine Identitätsauthentifizierungsmaschine, umfassend eine zweite Bilderfassungseinrichtung (12) zum Erfassen eines zweiten Bilds und Vergleichen eines über die Kommunikationsschnittstelle empfangenen ersten Bilds mit dem zweiten Bild, um ein Vergleichsresultat zu erlangen, und wobei das erste Zielobjekt direkt auf der ersten Aufnahmestruktur angeordnet ist,
wobei die erste Aufnahmestruktur (13) und die zweite Aufnahmestruktur (14) in einer geschichteten Struktur verteilt sind und sich die erste Aufnahmestruktur (13) in einer oberen Schicht der zweiten Aufnahmestruktur (14) befindet,
wobei die Hauptkörperstruktur (11) mit einer Aussparungsstruktur versehen ist, wobei eine Öffnung der Aussparungsstruktur einer ersten Seitenfläche der Hauptkörperstruktur (11) zugewandt ist, und die erste Seitenfläche mit der ersten Aufnahmestruktur (13) versehen ist, die Folgendes umfasst:
eine erste hohle Struktur ist an einer ersten Position auf der ersten Seitenfläche bereitgestellt, die der Öffnung der Aussparungsstruktur entspricht, und ein Schlitz zum Befestigen des ersten Zielobjekts ist an dem Umfang der ersten hohlen Struktur bereitgestellt.

10. Bilderfassungsvorrichtung nach Anspruch 9, wobei die erste Bilderfassungseinrichtung (12) an dem Boden der Aussparungsstruktur angeordnet ist.

11. Bilderfassungsvorrichtung nach Anspruch 9, wobei die zweite Aufnahmestruktur (14) zwischen der ersten Seitenfläche und einer Ebene, in der sich die Öffnung der Aussparungsstruktur befindet, gebildet ist, wobei an dem Umfang der Öffnung der Aussparungsstruktur eine Trägerplattform zum Befestigen des zweiten Zielobjekts bereitgestellt ist.

## Revendications

1. Dispositif d'acquisition d'image comprenant : une structure de corps principal (11) dotée d'un moyen d'acquisition d'image (12) et d'au moins deux structures de logement, les au moins deux structures de logement comprenant une première structure de logement (13) conçue pour placer un premier objet cible et une seconde structure de logement (14) conçue pour placer un second objet cible, dans lequel
la première structure de logement (13) est disposée à une première position de la structure de corps principal (11), la première position satisfaisant à la condition selon laquelle le premier objet cible placé sur la première structure de logement (13) est situé dans la couverture de zone d'acquisition du moyen d'acquisition d'image (12) ; et
la seconde structure de logement (14) est disposée à une seconde position de la structure de corps principal (11), la seconde position satisfaisant à la condition selon laquelle le second objet cible placé sur la seconde structure de logement (14) est situé dans la couverture de zone d'acquisition du moyen d'acquisition d'image (12), **caractérisé en ce que** le premier objet cible est directement disposé sur la première structure de logement,
dans lequel la première structure de logement (13) et la seconde structure de logement (14) sont réparties dans une structure en couches, et la première structure de logement (13) est située au niveau d'une couche supérieure de la seconde structure de logement (14),
dans lequel la structure de corps principal (11) est dotée d'une structure d'évidement, dans lequel une ouverture de la structure d'évidement fait face à une première surface latérale de la structure de corps principal (11), et la première surface latérale est dotée de la première structure de logement (13), qui comprend :
une première structure creuse qui est prévue à une première position sur la première surface latérale correspondant à l'ouverture de la structure d'évidement, et une fente permettant de fixer le premier objet cible qui est prévue à la périphérie de la première structure creuse.

2. Dispositif d'acquisition d'image selon la revendication 1, dans lequel le moyen d'acquisition d'image (12) est disposé au fond de la structure d'évidement.

3. Dispositif d'acquisition d'image selon la revendication 1, dans lequel la seconde structure de logement (14) est formée entre la première surface latérale et un plan où l'ouverture de la structure d'évidement est située, dans lequel un étage de support permettant de fixer le second objet cible est prévu à la périphérie de l'ouverture de la structure d'évidement.

4. Dispositif d'acquisition d'image selon la revendication 1, dans lequel un moyen d'éclairage d'appoint est prévu à l'intérieur de la structure d'évidement.

5. Dispositif d'acquisition d'image selon la revendication 4, dans lequel un matériau de guidage de la lumière est prévu sur une surface de la structure d'évidement.

6. Dispositif d'acquisition d'image selon la revendication 1, dans lequel une seconde surface latérale de la structure de corps principal (11) est dotée d'une base (15) permettant de fixer la structure de corps principal (11) sur une surface d'appui.

7. Dispositif d'acquisition d'image selon l'une quelconque des revendications 1 à 6, dans lequel la structure de corps principal (11) est en outre dotée d'un moyen de commande (16) conçu pour commander le moyen d'acquisition d'image (12), dans lequel le moyen de commande (16) est un bouton de commande ou un écran tactile.

8. Dispositif d'acquisition d'image selon l'une quelconque des revendications 1 à 6, dans lequel la structure de corps principal (11) est en outre dotée d'une interface de communication conçue pour permettre au dispositif d'acquisition d'image de communiquer avec un dispositif externe, et le port de communication comprend au moins une interface USB (Universal Serial Bus).

9. Système d'authentification d'identité comprenant :
un dispositif d'acquisition d'image comprenant :
une structure de corps principal (11) dotée d'un premier moyen d'acquisition d'image (12) et d'au moins deux structures de logement, les au moins deux structures de logement comprenant une première structure de logement (13) conçue pour placer un premier objet cible et une seconde structure de logement (14) conçue pour placer un second objet cible, dans lequel
la première structure de logement (13) est disposée à une première position de la structure de corps principal (11), la première position satisfaisant à la condition selon laquelle le premier objet cible placé sur la première structure de logement (13) est situé dans la couverture de zone d'acquisition du premier moyen d'acquisition d'image (12) ;
la seconde structure de logement (14) est disposée à une seconde position de la structure de corps principal (11), la seconde position satisfaisant à la condition selon laquelle le second objet cible placé sur la seconde structure de logement (14) est situé dans la couverture de zone d'acquisition du premier moyen d'acquisition d'image (12) ;
une interface de communication conçue pour recevoir une première image capturée par le premier moyen d'acquisition d'image (12), le système d'authentification d'identité étant **caractérisé en ce qu'**il comprend en outre :
une machine d'authentification d'identité comprenant un second moyen d'acquisition d'image (12) permettant de capturer une seconde image, et comparant une première image reçue par l'intermédiaire de l'interface de communication à la seconde image pour obtenir un résultat de comparaison, et dans lequel le premier objet cible est directement disposé sur la première structure de logement,
dans lequel la première structure de logement (13) et la seconde structure de logement (14) sont réparties dans une structure en couches, et la première structure de logement (13) est située au niveau d'une couche supérieure de la seconde structure de logement (14),
dans lequel la structure de corps principal (11) est dotée d'une structure d'évidement, dans lequel une ouverture de la structure d'évidement fait face à une première surface latérale de la structure de corps principal (11), et la première surface latérale est dotée de la première structure de logement (13), qui comprend :
une première structure creuse qui est prévue à une première position sur la première surface latérale correspondant à l'ouverture de la structure d'évidement, et une fente permettant de fixer le premier objet cible qui est prévue à la périphérie de la première structure creuse.

10. Dispositif d'acquisition d'image selon la revendication 9, dans lequel le premier moyen d'acquisition d'image (12) est disposé au fond de la structure d'évidement.

11. Dispositif d'acquisition d'image selon la revendication 9, dans lequel la seconde structure de logement (14) est formée entre la première surface latérale et un plan où l'ouverture de la structure d'évidement est située, dans lequel un étage de support permettant de fixer le second objet cible est prévu à la périphérie de l'ouverture de la structure d'évidement.
